(19) Europäisches Patentamt / European Patent Office / Office européen des brevets

(11) **EP 4 343 036 A1**

(12) **EUROPEAN PATENT APPLICATION**
published in accordance with Art. 153(4) EPC

(43) Date of publication:
**27.03.2024 Bulletin 2024/13**

(21) Application number: **22804557.1**

(22) Date of filing: **10.05.2022**

(51) International Patent Classification (IPC):
*C25B 11/032* (2021.01)    *C25B 11/052* (2021.01)
*C25B 11/061* (2021.01)    *C25B 11/075* (2021.01)
*C25B 9/00* (2021.01)    *C25B 9/19* (2021.01)
*C25B 9/23* (2021.01)    *C25B 1/04* (2021.01)

(52) Cooperative Patent Classification (CPC):
**C25B 1/04; C25B 9/00; C25B 9/19; C25B 9/23;
C25B 11/032; C25B 11/052; C25B 11/061;
C25B 11/075;** Y02E 60/36

(86) International application number:
**PCT/JP2022/019752**

(87) International publication number:
**WO 2022/244644 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.05.2021   JP 2021084502
19.04.2022   JP 2022068974**

(71) Applicant: **Panasonic Intellectual Property
Management Co., Ltd.
Osaka-shi, Osaka 540-6207 (JP)**

(72) Inventors:
• **ASAZAWA, Koichiro**
  **Kadoma-shi, Osaka 571-0057 (JP)**
• **SHIRATAKI, Hiroshi**
  **Kadoma-shi, Osaka 571-0057 (JP)**
• **MURASE, Hideaki**
  **Kadoma-shi, Osaka 571-0057 (JP)**
• **HAYASHI, Takao**
  **Kadoma-shi, Osaka 571-0057 (JP)**
• **KOGA, Koichi**
  **Kadoma-shi, Osaka 571-0057 (JP)**

(74) Representative: **Grünecker Patent- und
Rechtsanwälte
PartG mbB
Leopoldstraße 4
80802 München (DE)**

(54) **ANODE GAS DIFFUSION LAYER FOR WATER ELECTROLYSIS CELLS, WATER ELECTROLYSIS CELL, AND WATER ELECTROLYSIS DEVICE**

(57)    An anode gas diffusion layer for a water electrolysis cell includes metal fiber. The metal fiber has a section. The section constitutes a surface of the metal fiber. The section is composed of nickel. A water electrolysis cell includes an anode, a cathode, and an electrolyte membrane. The electrolyte membrane is disposed between the anode and the cathode. The anode includes the anode gas diffusion layer for the water electrolysis cell.

FIG. 1

EP 4 343 036 A1

**Description**

Technical Field

The present disclosure relates to an anode gas diffusion layer for a water electrolysis cell, a water electrolysis cell, and a water electrolyzer.

Background Art

In recent years, development of an anode gas diffusion layer used for a water electrolyzer has been expected.
PTL 1 describes an electrolytic electrode by using a metal porous body having a metal skeleton and a metal oxide thin film disposed on at least a portion of the surface of the metal skeleton. The electrolytic electrode is used as, for example, an electrolytic electrode of a hydrogen generator. In this regard, the metal skeleton is Ni or a Ni alloy, and the metal oxide is a metal oxide other than NiO. According to the method for producing a metal porous body described in PTL 1, after a Ni plating film is formed on the surface of a porous body base material, a thin film of a metal oxide such as $Al_2O_3$ is formed on the surface of the plating film. Therefore, it is understood that a thin film of a metal oxide such as $Al_2O_3$ is disposed on the surface of the metal porous body described in PTL 1.
PTL 2 describes a membrane electrode assembly including a pair of electrodes that are composed of a conductive material and that include a porous power feeder layer and an electrolyte membrane disposed between the pair of electrodes. The membrane electrode assembly is used for, for example, an electrochemical cell of a hydrogen generator.
NPL 1 describes a membrane electrode assembly in which a material such as Ti or a Ni foam coated with Pt is used for an anode gas diffusion layer. The durability of the anode gas diffusion layer is not described in NPL 1.

Citation List

Patent Literature

PTL 1: International Publication No. 2020/217668
PTL 2: Japanese Unexamined Patent Application Publication No. 2019-49043 Non Patent Literature

NPL 1: Renewable and Sustainable Energy Reviews, Vol. 81 (2018) p. 1690-1704

Summary of Invention

Technical Problem

It is an object of the present disclosure to provide an anode gas diffusion layer for a water electrolysis cell having excellent durability while suppressing overvoltage of the water electrolysis cell from increasing.

Solution to Problem

The present disclosure provides

an anode gas diffusion layer for a water electrolysis cell, the anode gas diffusion layer including metal fiber
wherein, in the metal fiber, a section constituting a surface of the metal fiber is composed of nickel.

Advantageous Effects of Invention

According to the present disclosure, an anode gas diffusion layer for a water electrolysis cell having excellent durability while suppressing overvoltage of the water electrolysis cell from increasing can be provided.

Brief Description of Drawings

[Fig. 1] Fig. 1 is a schematic diagram illustrating an example of a water electrolysis cell according to the present embodiment.

[Fig. 2] Fig. 2 is a schematic diagram illustrating an example of metal fiber according to the present embodiment.

[Fig. 3] Fig. 3 is a schematic sectional view illustrating an example of a water electrolyzer according to the present embodiment.

[Fig. 4] Fig. 4 is a schematic sectional view illustrating another example of the water electrolysis cell according to the present embodiment.

[Fig. 5] Fig. 5 is a schematic sectional view illustrating another example of the water electrolyzer according to the present embodiment.

[Fig. 6] Fig. 6 is a diagram illustrating the result of observation of a nickel fiber sintered body by using a scanning electron microscope.

[Fig. 7] Fig. 7 is a graph illustrating the result of a change over time in the voltage due to gas generation of a water electrolysis cell.

[Fig. 8] Fig. 8 is a graph illustrating the result of the measurement of a change in the contact resistivity of an anode gas diffusion layer versus the voltage.

Description of Embodiments

(Underlying knowledge forming basis of the present disclosure)

Regarding a measure against global warming, utilization of renewable energy such as sunlight and wind power has attracted attention. However, power generation by using renewable energy has a problem that fluctuations in the output are large. In addition, power generation by using renewable energy causes a problem that an excess power is wasted. Consequently, the utilization efficiency of the renewable energy is not always sufficient. Therefore, a method in which hydrogen is produced using the excess power and is stored has been researched to efficiently utilize the excess power.

In general, electrolysis of water can be used as a method for producing hydrogen by using excess power. The electrolysis of water is also referred to as water electrolysis. To inexpensively and stably produce hydrogen, development of a high-efficiency and long-life water electrolyzer has been desired. Examples of a main constituent component of the water electrolyzer include a membrane electrode assembly (MEA) composed of a gas diffusion layer, an electrode catalyst layer, and an electrolyte membrane.

To provide a high-efficiency and high-durability water electrolyzer, in particular, it is important to improve the performance and the durability of a gas diffusion layer used for an anode and a cathode. The gas diffusion layer can be formed by, for example, binding carbon fibers having a fiber diameter of about 8 $\mu$m by using a binder. However, the carbon fiber tends to be oxidatively decomposed at a high potential. Therefore, the function of the gas diffusion layer may deteriorate due to the water electrolyzer including the carbon fiber being used. Consequently, water electrolytic performance may deteriorate. Accordingly, it is important to develop a gas diffusion layer resistant to deterioration due to oxidation.

PTL 1 describes a hydrogen generator in which a metal porous body having a porous metal skeleton and a metal oxide thin film disposed on at least a portion of the surface of the metal skeleton is used as an electrolytic electrode. In PTL 1, for example, a resin foam such as a urethane foam is used as a porous base material for forming a porous metal skeleton. When such a resin foam is used, the skeleton of the resulting metal porous body tends to become thick. Therefore, it is difficult to say that using of this metal porous body provides an advantage from the viewpoint of enhancing electrolytic performance compared with the instance in which the carbon fiber having a fiber diameter of about 8 $\mu$m is used. In addition, it is conjectured that an electrolyte membrane tends to be damaged since the metal porous body has a three-dimensional network structure.

PTL 2 describes, as an example, an electrochemical apparatus in which a titanium nonwoven fabric or a titanium particle sintered body is used for a power feeder layer. In the embodiment of PTL 2, it is disclosed that a metal other than titanium can be used for the power feeder layer, but there is no examination in the example.

On the other hand, in general, a water electrolyzer is required to have properties of, for example, being operated at greater than or equal to 1 A/cm$^2$ and being stable when the apparatus is operated for a long time. NPL 1 describes a water electrolyzer in which a material such as a Ni foam is used as an anode gas diffusion layer of a membrane electrode assembly. However, the current density of the water electrolyzer is about 0.5 A/cm$^2$ and is low.

As described above, the water electrolyzers described in PTL 1 and NPL 1 have room for reexamination from the viewpoint of durability. The electrochemical apparatus described in PTL 2 has room for reexamination from the viewpoint of suppressing overvoltage from increasing. The present inventors performed intensive research and newly found that using of a gas diffusion layer including predetermined metal fiber provides advantages from the viewpoint of suppressing overvoltage from increasing and durability. As a result, the present disclosure was realized.

(Outline of aspect according to the present disclosure)

An anode gas diffusion layer for a water electrolysis cell according to a first aspect of the present disclosure includes metal fiber.

In the metal fiber, a section constituting a surface of the metal fiber is composed of nickel.

According to the first aspect, a gas diffusion layer having excellent durability while suppressing overvoltage of a water electrolysis cell from increasing can be provided.

In a second aspect of the present disclosure, for example, an average fiber diameter of the metal fiber in the anode gas diffusion layer for the water electrolysis cell according to the first aspect may be less than or equal to 30 $\mu$m. According to the second aspect, generated oxygen gas tends to be discharged from a membrane electrode assembly.

In a third aspect of the present disclosure, for example, regarding the anode gas diffusion layer for the water electrolysis cell according to the first aspect or the second aspect, the anode gas diffusion layer for the water electrolysis cell may consist essentially of the metal fiber. According to the third aspect, the gas diffusion layer more reliably has excellent durability.

In a fourth aspect of the present disclosure, for example, in the anode gas diffusion layer for the water electrolysis cell according to any one of the first aspect to the third aspect, the purity of the nickel may be greater than or equal to 90% by mass. According to the fourth aspect, the gas diffusion layer more reliably has excellent durability.

A water electrolysis cell according to a fifth aspect of the present disclosure includes

an anode,
a cathode, and
an electrolyte membrane disposed between the anode and the cathode.

The anode includes the anode gas diffusion layer for the water electrolysis cell according to any one of the first aspect to the fourth aspect.

According to the fifth aspect, the water electrolysis cell tends to have excellent durability.

In a sixth aspect of the present disclosure, for example, the anode in the water electrolysis cell according to the fifth aspect may further includes a catalyst layer including a catalyst. In addition, the catalyst may contain nickel as a constituent element. According to the sixth aspect, a water electrolysis cell providing advantages from the viewpoint of decreasing overvoltage can be provided.

In a seventh aspect of the present disclosure, for example, the electrolyte membrane in the water electrolysis cell according to the fifth aspect or the sixth aspect may include an anion-exchange membrane. According to the seventh aspect, an oxygen gas generated at the anode is not readily mixed with a hydrogen gas generated at the cathode.

A water electrolysis cell according to an eighth aspect of the present disclosure includes

a diaphragm separating a first space from a second space,
an anode disposed in the first space, and
a cathode disposed in the second space.

The anode includes the anode gas diffusion layer for the water electrolysis cell according to any one of the first aspect to the seventh aspect.

According to the eighth aspect, the water electrolysis cell tends to have excellent durability.

In a ninth aspect of the present disclosure, for example, the anode in the water electrolysis cell according to the eighth aspect may further includes a catalyst layer including a catalyst. In addition, the catalyst may contain nickel as a constituent element. According to the ninth aspect, a water electrolysis cell providing advantages from the viewpoint of decreasing overvoltage can be provided.

A water electrolyzer according to a tenth aspect of the present disclosure includes

the water electrolysis cell according to any one of the fifth aspect to the ninth aspect and
a voltage applicator that is connected to the anode and the cathode and that applies a voltage between the anode and the cathode.

According to the tenth aspect, the water electrolyzer tends to have high durability.

The embodiments according to the present disclosure will be described below with reference to the drawings. The present disclosure is not limited to the following embodiments.

(First embodiment)

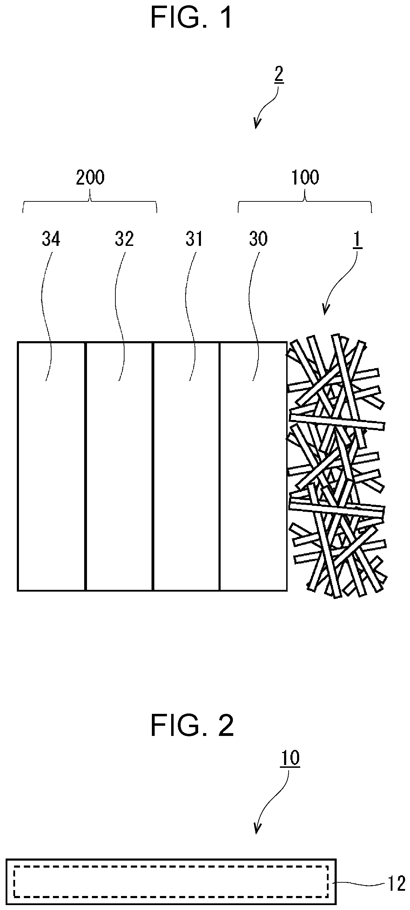

Fig. 1 is a schematic diagram illustrating an example of a water electrolysis cell according to the present embodiment. As illustrated in Fig. 1, a water electrolysis cell 2 includes an electrolyte membrane 31, an anode 100, and a cathode 200. The anode 100 includes an anode gas diffusion layer 1. The anode gas diffusion layer 1 contains metal fiber 10 described later. In the anode gas diffusion layer 1, metal fibers are, for example, entangled with each other.

Fig. 2 is a schematic diagram illustrating an example of the metal fiber according to the present embodiment. As illustrated in Fig. 2, the metal fiber 10 has a section 12. The section 12 constitutes, for example, a surface of the metal fiber and is composed of nickel. The section 12 does not have, for example, an oxide film. Since the anode gas diffusion layer 1 contains the metal fiber 10, the water electrolysis cell 2 can have excellent durability against alkali. In addition, the anode gas diffusion layer 1 can have excellent electron conductivity.

In the present specification, "is composed of nickel" means that, for example, the purity of nickel is greater than or equal to 90% by mass. The purity of nickel in the section 12 may be greater than or equal to 92% by mass, may be greater than or equal to 95% by mass, or may be greater than or equal to 99% by mass. Consequently, the anode gas diffusion layer 1 can have high electron conductivity. The purity of nickel in the section 12 can be determined using, for example, X-ray photoelectron spectroscopy (XPS).

The section 12 may be composed of nickel plating.

The thickness of the section 12 is not limited to a specific value. The value of the thickness is, for example, greater than or equal to 1 $\mu$m. The thickness of the section 12 may be greater than or equal to 5 $\mu$m or may be greater than or equal to 10 $\mu$m. The upper limit value of the thickness of the section 12 is not limited to a specific value. The upper limit value may be 30 $\mu$m or may be 10 $\mu$m. The section 12 having such a thickness enables the anode gas diffusion layer 1 to have excellent durability against alkali.

The metal fiber 10 may contain a metal other than nickel. Examples of the metal include iron, cobalt, aluminum, stainless steel, gold, and platinum.

The average fiber diameter of the metal fiber 10 is, for example, less than or equal to 30 $\mu$m. Consequently, since the anode gas diffusion layer 1 has appropriate gaps, a gas such as oxygen generated due to operation of the water electrolyzer tends to be discharged. In addition, since the contact area between the anode gas diffusion layer 1 and the catalyst layer tends to increase, the water electrolysis efficiency can be improved. The average fiber diameter of the metal fiber 10 may be less than or equal to 20 $\mu$m. The lower limit value of the average fiber diameter of the metal fiber 10 is not limited to a specific value. The lower limit value may be 5 $\mu$m or may be 10 $\mu$m.

The average fiber diameter of the metal fiber 10 can be determined by, for example, observing the metal fiber 10 by using a scanning electron microscope (SEM). Specifically, the maximum fiber diameter and the minimum fiber diameter of the metal fiber 10 are measured, and the average value thereof is defined as the fiber diameter of each metal fiber 10. In this regard, the fiber diameter of the metal fiber 10 means a fiber width in the direction perpendicular to the extension direction of the fiber. Fiber diameters of arbitrary 20 metal fibers 10 are calculated by the above-described method, and the average value thereof is defined as the average fiber diameter.

For example, the anode gas diffusion layer 1 consists essentially of only the metal fiber 10. The anode gas diffusion layer 1 may be a sintered body of the metal fiber 10. Consequently, the gas diffusion layer can have excellent electron conductivity. The anode gas diffusion layer 1 may contain a component other than the metal fiber 10. The content of the component other than the metal fiber 10 in the anode gas diffusion layer 1 is, for example, less than or equal to 10% by mass.

The thickness of the anode gas diffusion layer 1 is not limited to a specific value. The value of the thickness may be greater than or equal to 50 $\mu$m and less than or equal to 1,000 $\mu$m or may be greater than or equal to 100 $\mu$m and less than or equal to 500 $\mu$m.

The porosity of the anode gas diffusion layer 1 is not limited to a specific value. The value of the porosity may be greater than or equal to 50% by volume, may be greater than or equal to 60% by volume, or may be greater than or equal to 80% by volume. The upper limit value of the porosity of the anode gas diffusion layer 1 is not limited to a specific value. The upper limit value may be 90% by volume or may be 85% by volume. The anode gas diffusion layer 1 having such a porosity facilitates diffusion of water and gas such as oxygen. As a result, OH⁻ is readily supplied to the catalyst layer. The porosity of the anode gas diffusion layer 1 can be determined by, for example, a method described in the example.

The method for forming the section 12 is not limited to a specific method. The section 12 may be formed by a method such as a method in which a vacuum technology is used, plating, and coating. Examples of the method in which a vacuum technology is used include a vacuum vapor deposition method, a DC sputtering method, a RF magnetron sputtering method, pulse laser deposition (PLD), atomic layer deposition (ALD), and chemical vapor deposition (CVD).

As illustrated in Fig. 1, the water electrolysis cell 2 includes the electrolyte membrane 31, the anode 100, and the cathode 200. The electrolyte membrane 31 is disposed, for example, between the anode 100 and the cathode 200. The anode 100 includes the anode gas diffusion layer 1 described above. Since the water electrolysis cell 2 includes the anode gas diffusion layer 1, the oxygen gas generated due to operation of the water electrolysis cell 2 tends to be discharged from the membrane electrode assembly. The cathode 200 includes, for example, a cathode gas diffusion layer 34. For example, the oxygen gas generated in the catalyst layer 32 due to the cathode gas diffusion layer 34 tends to be discharged from the membrane electrode assembly.

The electrolyte membrane 31 may be an electrolyte membrane having ionic conductivity. The electrolyte membrane 31 is not limited to a specific type. The electrolyte membrane 31 may include an anion-exchange membrane. The electrolyte membrane 31 is configured so that the oxygen gas generated at the anode 100 is not readily mixed with the hydrogen gas generated at the cathode 200.

The anode 100 includes, for example, a catalyst layer 30. The catalyst layer 30 is responsible for, for example, generating the oxygen gas. The catalyst layer 30 may be disposed on one main surface of the electrolyte membrane 31. Herein, "main surface" means a surface having the largest area of the electrolyte membrane 31. In the anode 100, the anode gas diffusion layer 1 may be disposed on the catalyst layer 30. An oxygen gas generation reaction occurs due to water and an electron being supplied to the catalyst layer 30.

The catalyst layer 30 may have a catalyst containing nickel as a constituent element. In such an instance, the catalyst layer 30 and the anode gas diffusion layer 1 contains the same type of metal. According to such a configuration, a water electrolysis cell providing advantages from the viewpoint of decreasing overvoltage can be provided.

The cathode 200 includes, for example, a catalyst layer 32. The catalyst layer 32 is responsible for, for example, generating the hydrogen gas. The catalyst layer 32 may be disposed on the other main surface of the electrolyte membrane 31. That is, the catalyst layer 32 may be disposed on the main surface opposite to the main surface provided with the catalyst layer 30. The catalyst usable for the catalyst layer 32 is not limited to a specific type. The catalyst may be platinum. In the cathode 200, the porous and conductive gas diffusion layer 34 may be further disposed on the catalyst layer 32. A hydrogen gas generation reaction occurs due to water and an electron being supplied to the catalyst layer 32.

According to the above-described configuration, the water electrolysis cell 2 can have high durability.

(Second embodiment)

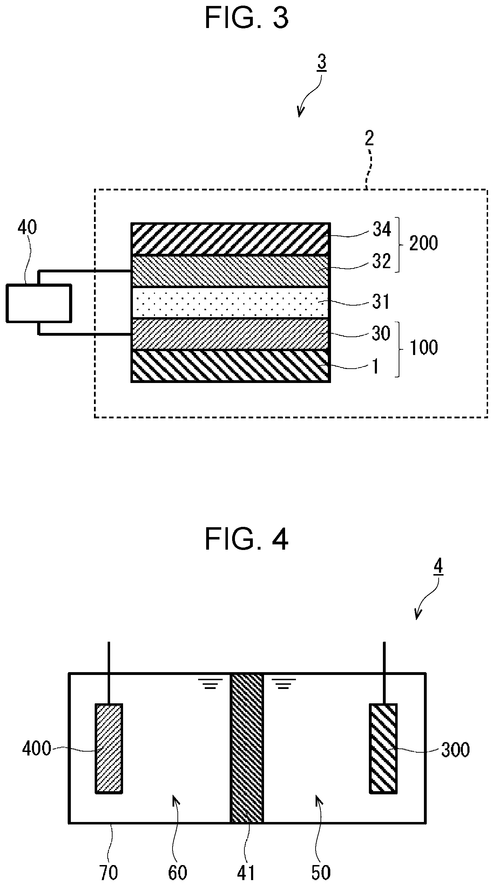

Fig. 3 is a schematic sectional view illustrating an example of the water electrolyzer according to the present embodiment.

A water electrolyzer 3 includes the water electrolysis cell 2 and a voltage applicator 40. The water electrolysis cell 2 is akin to the water electrolysis cell 2 in the first embodiment and, therefore, explanations thereof are omitted.

The voltage applicator 40 is connected to the anode 100 and the cathode 200 of the water electrolysis cell 2. The voltage applicator 40 is a unit for applying a voltage between the anode 100 and the cathode 200 of the water electrolysis cell 2.

The potential of the anode 100 increases and the potential of the cathode 200 decreases due to the voltage applicator 40. The voltage applicator 40 is not limited to a specific type provided that a voltage can be applied between the anode 100 and the cathode 200. The voltage applicator 40 may be a unit for adjusting a voltage applied between the anode 100 and the cathode 200. Specifically, when the voltage applicator 40 is connected to a direct current power supply such as a battery, a solar cell, or a fuel cell, the voltage applicator 40 includes a DC/DC converter. When the voltage applicator 40 is connected to an alternating-current power supply such as a commercially available power supply, the voltage applicator 40 includes an AC/DC converter. The voltage applicator 40 may be a power-type power supply in which a voltage applied between the anode 100 and the cathode 200 and a current flowing between the anode 100 and the cathode 200 are adjusted so that a power supplied to the water electrolyzer 3 is set to be a predetermined value.

According to the above-described configuration, the water electrolyzer 3 can have high durability.

(Third embodiment)

Fig. 4 is a schematic sectional view illustrating another example of the water electrolysis cell according to the present embodiment.

A water electrolysis cell 4 is, for example, an alkaline water electrolysis cell 4 by utilizing an alkaline aqueous solution. An alkaline aqueous solution is used for the alkaline water electrolysis. Examples of the alkaline aqueous solution include a potassium hydroxide aqueous solution and a sodium hydroxide aqueous solution.

The alkaline water electrolysis cell 4 includes an anode 300 and a cathode 400. The alkaline water electrolysis cell 4 further includes an electrolytic bath 70, a first space 50, and a second space 60. The anode 300 is disposed in the first space 50. The cathode 400 is disposed in the second space 60. The alkaline water electrolysis cell 4 includes a diaphragm 41. The diaphragm 41 is disposed inside the electrolytic bath 70 and separates the first space 50 from the second space 60. The anode 300 includes, for example, a catalyst layer and a gas diffusion layer. The catalyst layer and the gas diffusion layer included in the anode 300 may be akin to the catalyst layer 30 and the anode gas diffusion layer 1 described in the first embodiment. The cathode 400 includes, for example, a catalyst layer and a gas diffusion layer. The catalyst layer and the gas diffusion layer included in the cathode 400 may be akin to the catalyst layer 32 and the gas diffusion layer 34 described in the first embodiment.

The diaphragm 41 is a diaphragm for alkaline water electrolysis.

The anode 300 may be disposed while being in contact with the diaphragm 41, or the anode 300 and the diaphragm 41 may be spaced. The cathode 400 may be disposed while being in contact with the diaphragm 41, or the cathode 400 and the diaphragm 41 may be spaced.

The alkaline water electrolysis cell 4 electrolyzes an alkaline aqueous solution so as to produce hydrogen and oxygen. An aqueous solution containing a hydroxide of alkali metal or alkaline-earth metal can be supplied to the first space 50 of the alkaline water electrolysis cell 4. An alkaline aqueous solution can be supplied to the second space 60 of the alkaline water electrolysis cell 4. Hydrogen and oxygen are produced by performing electrolysis while an alkaline aqueous solution having a predetermined concentration is discharged from the first space 50 and the second space 60.

According to the above-described configuration, the alkaline water electrolysis cell 4 can have high durability.

(Fourth embodiment)

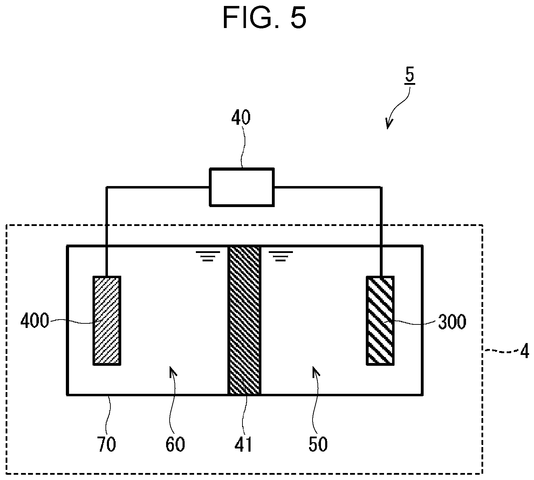

Fig. 5 is a schematic sectional view illustrating another example of the water electrolyzer according to the present embodiment.

A water electrolyzer 5 according to the present embodiment is, for example, an alkaline water electrolyzer 5 by utilizing an alkaline aqueous solution. The alkaline water electrolyzer 5 includes the alkaline water electrolysis cell 4 and the voltage applicator 40. The alkaline water electrolysis cell 4 is akin to the alkaline water electrolysis cell 4 in the third embodiment and, therefore, explanations thereof are omitted.

The voltage applicator 40 is connected to the anode 300 and the cathode 400 of the alkaline water electrolysis cell 4. The voltage applicator 40 is a unit for applying a voltage between the anode 300 and the cathode 400 of the alkaline water electrolysis cell 4.

According to the above-described configuration, the alkaline water electrolyzer 5 can have high durability.

EXAMPLES

The present disclosure will be described below in further detail with reference to the examples. In this regard, the following examples are exemplifications, and the present disclosure is not limited to the following examples.

(Example 1)

Initially, an electrode ink composed of an anode catalyst, a binder, and a solvent was prepared. Regarding the anode catalyst, Ni-Fe LDH which is a layered double hydroxide (LDH) containing Ni and Fe was used. Regarding the solvent, a solvent mixture of water and ethanol was used. An anode catalyst layer was formed by coating an anion-exchange membrane with the electrode ink through spray coating. A nickel fiber sintered body NDF-17332-000 produced by Bekaert was stacked, as an anode gas diffusion layer, on the resulting anode catalyst layer. Consequently, an anode was formed on the anion-exchange membrane. The average fiber diameter of the nickel fiber included in the nickel fiber sintered body was about 14 $\mu$m. The material used for the anode gas diffusion layer according to Example 1 was presented in detail in Table 1.

Carbon paper TGP-H-120 produced by Toray Industries, Ltd. was used as a cathode gas diffusion layer. A cathode catalyst layer was formed by coating the carbon paper with Pt-supporting carbon through spray coating. Pt-supporting carbon TEC10E50E produced by Tanaka Kikinzoku Kogyo K.K. was used as the Pt-supporting carbon. Consequently, a cathode in which the cathode catalyst layer was formed on the cathode gas diffusion layer was obtained. Subsequently, a membrane electrode assembly according to Example 1 was produced by stacking the cathode catalyst layer and the anion-exchange membrane so as to be in contact with each other.

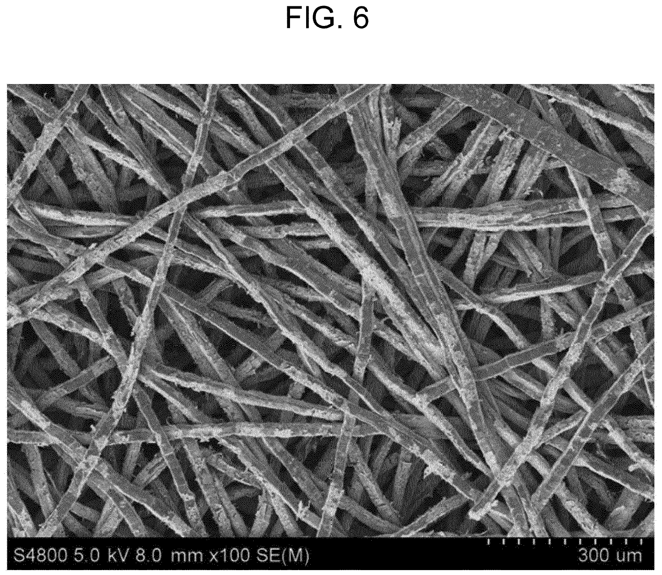

Fig. 6 is a diagram illustrating the result of observation of a nickel fiber sintered body by using a scanning electron microscope. As illustrated in Fig. 6, fibers were included in the nickel fiber sintered body.

(Example 2)

An anode according to Example 2 was produced in the manner akin to that in Example 1 except that a nickel fiber sintered body Bekipor 2NI 18-0.25 produced by Bekaert was used as the anode gas diffusion layer. Bekipor is a registered trademark of Bekaert.

(Comparative example 1)

An anode according to Comparative example 1 was produced in the manner akin to that in Example 1 except that carbon paper TGP-H-120 produced by Toray Industries, Ltd. was used as the anode gas diffusion layer. The average fiber diameter of the carbon fiber included in the carbon paper was about 8 $\mu$m. A membrane electrode assembly according to Comparative example 1 was produced in the manner akin to that in Example 1 except that the anode according to Comparative example 1 was used.

(Comparative example 2)

An anode according to Comparative example 2 was produced in the manner akin to that in Example 1 except that Pt-plated Ti 2GDL07N-030 produced by Bekaert was used as the anode gas diffusion layer. Regarding Pt-plated Ti, the surface of titanium fiber was plated with platinum. The average fiber diameter of the Pt-plated Ti was about 22 $\mu$m. A membrane electrode assembly according to Comparative example 2 was produced in the manner akin to that in Example 1 except that the anode according to Comparative example 2 was used.

(Calculation of porosity)

The porosity of the anode gas diffusion layer according to Example 1, Comparative example 1, or Comparative example 2 was determined using a weight porosity method. Initially, the apparent volume V and the dry weight W of the anode gas diffusion layer were measured, and the bulk density $\rho_a$ of the anode gas diffusion layer was calculated on the basis of Formula (1) below.

$$\rho_a = W/V \quad \text{Formula (1)}$$

Subsequently, the porosity P of the anode gas diffusion layer was calculated on the basis of Formula (2) below. The true density $\rho_t$ of the anode gas diffusion layer was measured using a gas replacement method. The results are presented in Table 1.

$$P = (1 - \rho_a/\rho_t) \times 100 \quad \text{Formula (2)}$$

[Table 1]

|  | Example 1 | Example 2 | Comparative example 1 | Comparative example 2 |
|---|---|---|---|---|
| Material | Ni | Ni | carbon | Pt-plated Ti |
| Average fiber diameter ($\mu$m) | 14 | 22 | 8 | 22 |
| Porosity (% by volume) | 85 | 60 | 80 | 74 |
| Thickness of anode gas diffusion layer ($\mu$m) | 220 | 250 | 370 | 300 |
| Initial voltage (V) | 1.563 | - | 1.566 | 1.679 |

(Measurement of cell voltage)

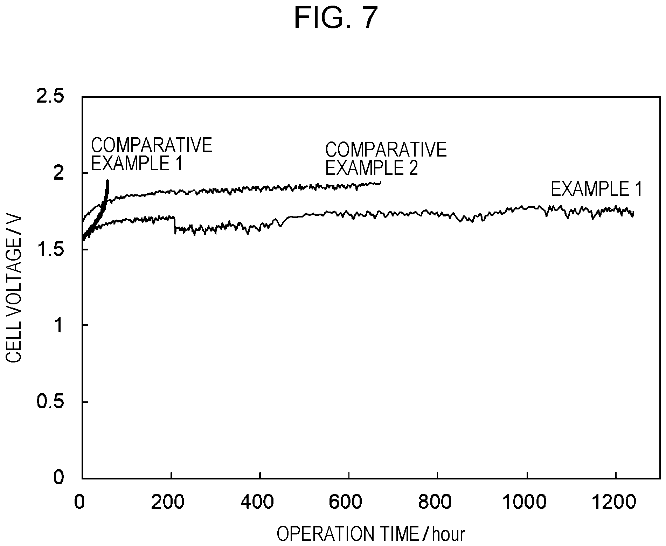

A water electrolysis cell was produced using the membrane electrode assembly according to Example 1, Comparative example 1, or Comparative example 2, and the cell voltage of the water electrolysis cell was measured. Regarding the measurement, a change over time in the voltage due to gas generation of the water electrolysis cell was measured using a water electrolysis cell evaluation apparatus produced by netuden kougyou Co., Ltd. under the following conditions. The results are illustrated in Fig. 7. In Fig. 7, the cell voltage when the operation time of the water electrolysis cell is 0 hours, in other words, immediately after start of the operation of water electrolysis, is defined as an initial voltage. The measurement results of the initial voltage are presented in Table 1.

[Measurement condition]

·Supply liquid: 1 mol/liter KOH aqueous solution
·Liquid supply rate of each of anode and cathode: 10 cm$^3$/min
·Temperature of water electrolysis cell: 80°C
·Pressure: normal pressure
·Current density: 1 A/cm$^2$
·Effective surface area of electrode: 1 cm$^2$

Fig. 7 is a graph illustrating the result of a change over time in the voltage due to gas generation of a water electrolysis cell. The vertical axis represents the cell voltage. The horizontal axis represents the operation time of the water electrolysis cell. As illustrated in Fig. 7, in Example 1, even when the operation time was greater than 1,200 hours, the cell voltage was low. It was found that the water electrolysis cell according to Example 1 has excellent durability.

As presented in Table 1, when the current density was 1 A/cm$^2$, the initial voltage of the water electrolysis cell according to Example 1 was 1.563 V. On the other hand, the initial voltage of the water electrolysis cell according to Comparative example 2 was 1.679 V. When the current density was 1 A/cm$^2$, the initial voltage of the water electrolysis cell according to Example 1 was lower than the initial voltage of the water electrolysis cell according to Comparative example 2. It was found that the water electrolysis cell including the gas diffusion layer according to Example 1 has excellent electrolytic performance.

In this regard, the theoretical voltage of water electrolysis is 1.23 V. In Example 1, an overvoltage relative to the theoretical voltage of water electrolysis was 0.333 V. In Comparative example 2, an overvoltage relative to the theoretical voltage of water electrolysis was 0.449 V. The overvoltage in Example 1 was 0.116 V (116 mV) less than the overvoltage in Comparative example 2. The overvoltage in Example 1 was 26% less than the overvoltage in Comparative example 2. In Example 1, the nickel fiber sintered body was used as the anode gas diffusion layer. It was found that, according to the water electrolysis cell of Example 1, overvoltage can be suppressed from increasing.

(Measurement of contact resistivity of anode gas diffusion layer)

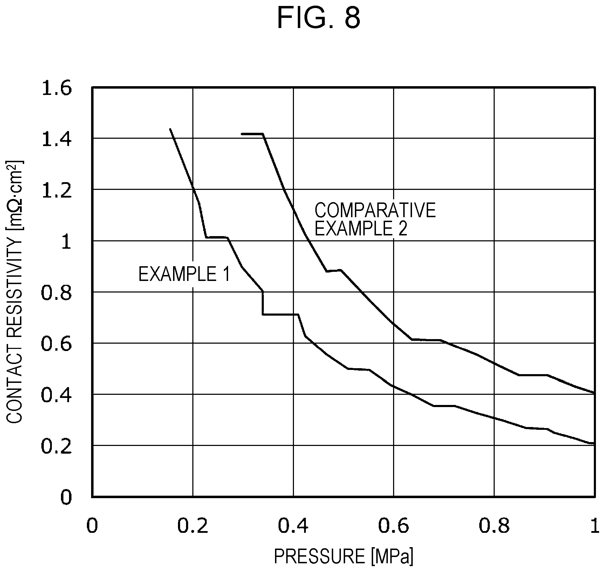

The contact resistivity of the anode gas diffusion layer used in Example 1 or Comparative example 2 was measured. UNIVERSAL TESTING MACHINE produced by IMADA SEISAKUSHO CO., LTD. and AC mΩ Meter 3566 produced by Tsuruga Electric Corporation were used for measuring the contact resistivity. The contact resistivity was calculated by pinching the anode gas diffusion layer with a jig, measuring the resistance value, and subtracting the resistance value of the jig. Specifically, the anode gas diffusion layer formed to have a diameter of 30 mm was placed on a measurement jig, the displacement and the resistance value when a load of 4 kN was applied were measured, and the resistance value measured in a state in which the anode gas diffusion layer was not present was subtracted. In this regard, Fig. 8 illustrates the result of the measurement of a change in the contact resistivity of the anode gas diffusion layer versus the voltage.

Fig. 8 is a graph illustrating the result of the measurement of a change in the contact resistivity of the anode gas diffusion layer versus the voltage. In Fig. 8, the vertical axis represents the contact resistivity [mΩ·cm$^2$] of the anode gas diffusion layer. The horizontal axis represents the pressure [MPa]. When the pressure was 1 MPa, the contact resistivity of the anode gas diffusion layer used in Example 1 was 0.2 mΩ·cm$^2$. When the pressure was 1 MPa, the contact resistivity of the anode gas diffusion layer used in Comparative example 2 was 0.4 mΩ·cm$^2$. Consequently, the contact resistivity of the anode gas diffusion layer used in Example 1 was 0.2 mΩ·cm$^2$ less than the contact resistivity of the anode gas diffusion layer used in Comparative example 2. It is conjectured that the cause of this is due to the type of the metal contained in the anode gas diffusion layer being different between Example 1 and Comparative example 2.

According to the measurement results of the contact resistivity of the anode gas diffusion layer, the difference in the contact resistivity of the anode gas diffusion layer between Example 1 and Comparative example 2 was 0.2 mΩ·cm$^2$. From this difference in the contact resistivity, it is predicted that the difference in the overvoltage between the water electrolysis cell of Example 1 and the water electrolysis cell of Comparative example 2 is 0.2 [mΩ·cm$^2$] $\times$ 1 [A/cm$^2$] = 0.2 mV when the current density is 1 A/cm$^2$. On the other hand, as described above, the difference in the overvoltage between the water electrolysis cell of Example 1 and the water electrolysis cell of Comparative example 2 was 116 mV. Therefore, the difference in the overvoltage between Example 1 and Comparative example 2 was greater than the value predicted from the contact resistivity. In Example 1, nickel is contained in the anode gas diffusion layer. In addition, in Example 1, the catalyst layer has a catalyst also containing nickel as a constituent element. It is conjectured that the difference in the overvoltage was greater than the predicted value since the anode gas diffusion layer and the catalyst layer contain the same type of metal.

(Measurement of current density-voltage characteristics of water electrolysis cell)

A water electrolysis cell was produced using the membrane electrode assembly according to Example 1 or Example 2. The current density-voltage characteristics of the water electrolysis cell were measured under the measurement conditions akin to that in (Measurement of cell voltage) described above except for the following measurement conditions. The current density-voltage characteristics of the water electrolysis cell were measured by controlling the applied current by using an external power supply apparatus so as to stepwise increase the current density from 0 A/cm$^2$ to 2 A/cm$^2$.

When the current density was 1 A/cm$^2$, the ratio $X_1$ of the cell voltage of the water electrolysis cell according to Example 1 to the cell voltage of the water electrolysis cell according to Example 2 was 1.01. When the current density was 2 A/cm$^2$, the ratio $X_2$ of the cell voltage of the water electrolysis cell according to Example 1 to the cell voltage of the water electrolysis cell according to Example 2 was 1.00. As presented in Table 1, the nickel fiber sintered body used in Example 1 differs from the nickel fiber sintered body used in Example 2 in the values of the average fiber diameter and the porosity. That is, Example 1 differs from Example 2 in the structure of the anode gas diffusion layer. However, according to the values of the ratio Xi when the current density was 1 A/cm$^2$ and the ratio $X_2$ when the current density was 2 A/cm$^2$, it is understood that the cell voltage of the water electrolysis cell according to Example 1 and the cell voltage of the water electrolysis cell according to Example 2 were at the same level. From these results, it is conjectured that the cell voltage is not readily influenced by the difference in the structure of the anode gas diffusion layer.

Industrial Applicability

An aspect of the present disclosure can be utilized for a gas diffusion layer having higher resistance to deterioration due to oxidation than ever before with respect to a reaction of water electrolysis.

Reference Signs List

1 anode gas diffusion layer
2, 4 water electrolysis cell
3, 5 water electrolyzer
10 metal fiber
12 section
30, 32 catalyst layer
31 electrolyte membrane
34 gas diffusion layer
40 voltage applicator
41 diaphragm
50, 60 space
70 electrolytic bath
100, 300 anode
200, 400 cathode

**Claims**

1. An anode gas diffusion layer for a water electrolysis cell, the anode gas diffusion layer comprising:

   metal fiber
   wherein, in the metal fiber, a section constituting a surface of the metal fiber is composed of nickel.

2. The anode gas diffusion layer for the water electrolysis cell according to claim 1,
   wherein an average fiber diameter of the metal fiber is less than or equal to 30 μm.

3. The anode gas diffusion layer for the water electrolysis cell according to claim 1 or claim 2,
   wherein the anode gas diffusion layer for the water electrolysis cell consists essentially of the metal fiber.

**4.** The anode gas diffusion layer for the water electrolysis cell according to claim 1,
wherein a purity of the nickel is greater than or equal to 90% by mass.

**5.** A water electrolysis cell comprising:

an anode;
a cathode; and
an electrolyte membrane disposed between the anode and the cathode,
wherein the anode includes the anode gas diffusion layer for the water electrolysis cell according to claim 1.

**6.** The water electrolysis cell according to claim 5,
wherein the anode further includes a catalyst layer including a catalyst containing nickel as a constituent element.

**7.** The water electrolysis cell according to claim 5,
wherein the electrolyte membrane includes an anion-exchange membrane.

**8.** A water electrolysis cell comprising:

a diaphragm separating a first space from a second space;
an anode disposed in the first space; and
a cathode disposed in the second space,
wherein the anode includes the anode gas diffusion layer for the water electrolysis cell according to claim 1.

**9.** The water electrolysis cell according to claim 8,
wherein the anode further includes a catalyst layer including a catalyst containing nickel as a constituent element.

**10.** A water electrolyzer comprising:

the water electrolysis cell according to claim 5; and
a voltage applicator that is connected to the anode and the cathode and that applies a voltage between the anode and the cathode.

# FIG. 1

# FIG. 2

# FIG. 3

# FIG. 4

# FIG. 5

# FIG. 6

S4800 5.0 kV 8.0 mm x100 SE(M)                    300 um

# FIG. 7

# FIG. 8

## INTERNATIONAL SEARCH REPORT

| International application No. |
|---|
| **PCT/JP2022/019752** |

**A. CLASSIFICATION OF SUBJECT MATTER**

*C25B 11/032*(2021.01)i; *C25B 11/052*(2021.01)i; *C25B 11/061*(2021.01)i; *C25B 11/075*(2021.01)i; *C25B 9/00*(2021.01)i; *C25B 9/19*(2021.01)i; *C25B 9/23*(2021.01)i; *C25B 1/04*(2021.01)i

FI: C25B11/032; C25B11/061; C25B1/04; C25B9/19; C25B9/00 A; C25B11/052; C25B11/075; C25B9/23

According to International Patent Classification (IPC) or to both national classification and IPC

**B. FIELDS SEARCHED**

Minimum documentation searched (classification system followed by classification symbols)

C25B1/04; C25B11/00-C25B11/097

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-518017 A (TECHNISCHE UNIV. DELFT) 05 July 2018 (2018-07-05) paragraphs [0035], [0077]-[0080], fig. 1A | 1-10 |
| A | JP 2015-536383 A (INDUSTRIE DE NORA S.P.A.) 21 December 2015 (2015-12-21) paragraphs [0017]-[0020], fig. 1 | 1-10 |
| A | JP 2020-200232 A (PANASONIC IP MANAGEMENT CORP.) 17 December 2020 (2020-12-17) entire text, fig. 1-11 | 1-10 |
| A | WO 2017/154134 A1 (HIROSAKI UNIV.) 14 September 2017 (2017-09-14) entire text, fig. 1-9 | 1-10 |
| A | JP 9-155157 A (OPT D D MELCO LAB. KK) 17 June 1997 (1997-06-17) entire text, fig. 1, 2 | 1-10 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 July 2022** | **19 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| International application No. |
|---|
| **PCT/JP2022/019752** |

| Patent document cited in search report | | | Publication date (day/month/year) | Patent family member(s) | | | Publication date (day/month/year) |
|---|---|---|---|---|---|---|---|
| JP | 2018-518017 | A | 05 July 2018 | US | 2018/0138569 | A1 | |
| | | | | paragraphs [0044], [0092]-[0095], fig. 1A | | | |
| | | | | WO | 2016/178564 | A1 | |
| | | | | CA | 2984483 | A1 | |
| | | | | KR | 10-2018-0015147 | A | |
| | | | | CN | 107810292 | A | |
| JP | 2015-536383 | A | 21 December 2015 | US | 2015/0240368 | A1 | |
| | | | | paragraphs [0017]-[0020], fig. 1 | | | |
| | | | | WO | 2014/060417 | A1 | |
| | | | | CN | 104662203 | A | |
| | | | | KR | 10-2015-0070293 | A | |
| JP | 2020-200232 | A | 17 December 2020 | US | 2021/0346879 | A1 | |
| | | | | entire text, fig. 1-9 | | | |
| | | | | WO | 2020/250590 | A1 | |
| | | | | EP | 3922760 | A1 | |
| | | | | CN | 113302341 | A | |
| WO | 2017/154134 | A1 | 14 September 2017 | (Family: none) | | | |
| JP | 9-155157 | A | 17 June 1997 | (Family: none) | | | |

Form PCT/ISA/210 (patent family annex) (January 2015)

**REFERENCES CITED IN THE DESCRIPTION**

**Patent documents cited in the description**

- JP 2020217668 A

- JP 2019049043 A

**Non-patent literature cited in the description**

- *Renewable and Sustainable Energy Reviews,* 2018, vol. 81, 1690-1704